# EUROPÄISCHE PATENTSCHRIFT

(11) **EP 3 353 129 B1**
(45) Veröffentlichungstag und Bekanntmachung des Hinweises auf die Patenterteilung: **03.09.2025**
(21) Anmeldenummer: 16775583.4
(22) Anmeldetag: 22.09.2016
(51) Int. Cl.: C04B 24/16, C04B 24/24, C04B 24/26

(54) **COPOLYMERE MIT GRADIENTENSTRUKTUR**
COPOLYMERS HAVING A GRADIENT STRUCTURE
COPOLYMERE DOTE DE STRUCTURE A GRADIENT D'INDICE

(30) Priorität: 24.09.2015 EP 15186764
(43) Veröffentlichungstag der Anmeldung: 01.08.2018
(73) Patentinhaber: Sika Technology AG, 6340 Baar (CH)
(72) Erfinder: WEIDMANN, Jürg, 8404 Winterthur (CH); ZIMMERMANN, Jörg, 8400 Winterthur (CH)
(74) Vertreter: Sika Patent Attorneys
(86) Internationale Anmeldenummer: PCT/EP2016/072558
(87) Internationale Veröffentlichungsnummer: WO 2017/050907

(56) Entgegenhaltungen:
- EP-A1- 3 122 794
- EP-A2- 0 924 241
- EP-A2- 1 110 981
- EP-B2- 1 110 981
- WO-A1-2004/016668
- WO-A1-2011/015780
- FR-A1- 2 949 777

## Beschreibung

### Technisches Gebiet

Die Erfindung betrifft ein Copolymer, insbesondere zur Verwendung als Dispergiermittel für Feststoffpartikel, im Besonderen zur Verwendung als Dispergiermittel für mineralische Bindemittelzusammensetzungen, mit einem Polymerrückgrat und daran gebundenen Seitenketten, umfassend wenigstens eine ionisierbare Monomereinheit sowie wenigstens eine Seitenketten-tragende Monomereinheit. Zudem bezieht sich die Erfindung auf ein Verfahren zur Herstellung eines Copolymers, die Verwendung von Copolymeren sowie eine mineralische Bindemittelzusammensetzung und daraus gebildete Formköper enthaltend Copolymere.

### Stand der Technik

Dispergiermittel oder Fliessmittel werden in der Bauindustrie als Verflüssiger oder wasserreduzierende Mittel für mineralische Bindemittelzusammensetzungen, wie z.B. Beton, Mörtel, Zemente, Gipse und Kalk, eingesetzt. Die Dispergiermittel sind im Allgemeinen organische Polymere, welche dem Anmachwasser zugesetzt oder als Feststoff den Bindemittelzusammensetzungen beigefügt werden. Dadurch können sowohl die Konsistenz der Bindemittelzusammensetzung während der Verarbeitung als auch die Eigenschaften in ausgehärtetem Zustand in vorteilhafter Weise verändert werden. Die WO 2011015780 offenbart die Verwendung von kontrolliert polymerisierten Polymeren als Superplasticizer in hydraulisch abbindenden Zusammensetzungen.

Als besonders effektive Dispergiermittel bekannt sind beispielsweise Kammpolymere auf Polycarboxylatbasis. Solche Kammpolymere verfügen über ein Polymerrückgrat und daran gebunden Seitenketten. Entsprechende Polymere sind z.B. in der EP 1 138 697 A1 (Sika AG) beschrieben.

Ebenfalls bekannt als Betonzusatzmittel sind Copolymermischungen wie sie z.B. in der EP 1 110 981 A2 (Kao) erwähnt sind. Die Copolymermischungen werden hergestellt, indem ethylenisch ungesättigte Monomere in einer freien radikalischen Polymerisationsreaktion umgesetzt werden, wobei das molare Verhältnis der beiden Monomere während dem Polymerisationsvorgang wenigstens einmal geändert wird.

Derartige Kammpolymere sind zwar sehr wirksam, müssen aber je nach Anwendung teilweise relativ hoch dosiert werden, was aus ökonomischer Sicht nachteilig ist. Je nach Bindemittelzusammensetzung verlieren die Kammpolymere zudem schon nach kurzer Zeit ihre Wirkung.

Diese Nachteile der Kammpolymere können zwar durch Kombination mit weiteren Zusatzmitteln zumindest zum Teil kompensiert werden. Solche Lösungen sind aber meist kompliziert in der Anwendung und teuer.

Es besteht daher nach wie vor Bedarf nach verbesserten Dispergiermitteln, welche die genannten Nachteile nicht aufweisen.

### Darstellung der Erfindung

Aufgabe der Erfindung ist es daher, die vorstehend genannten Nachteile zu überwinden. Insbesondere soll ein verbessertes Dispergiermittel, insbesondere für Feststoffpartikel und im Besonderen für mineralische Bindemittelzusammensetzungen, bereitgestellt werden. Das Dispergiermittel soll insbesondere eine effektive Verflüssigung und gute Verarbeitung von mineralischen Bindemittelzusammensetzungen ermöglichen. Im Besonderen soll die Wirkung des Dispergiermittels über möglichst lange Zeit aufrechterhalten bleiben. Weiter ist erwünscht, dass das Dispergiermittel möglichst flexibel und kontrolliert produziert werden kann.

Überraschenderweise wurde gefunden, dass diese Aufgabe durch die Merkmale des unabhängigen Anspruchs 1 gelöst werden kann.

Kern der Erfindung ist demnach ein Copolymer, insbesondere zur Verwendung als Dispergiermittel für Feststoffpartikel, im Besonderen zur Verwendung als Dispergiermittel für mineralische Bindemittelzusammensetzungen, mit einem Polymerrückgrat und daran gebundenen Seitenketten, umfassend wenigstens eine ionisierbare Monomereinheit **M1** sowie wenigstens eine Seitenketten-tragende Monomereinheit **M2,** wobei das Copolymer in wenigstens einem Abschnitt in einer Richtung entlang des Polymerrückgrats bezüglich der ionisierbare Monomereinheit **M1** und/oder bezüglich der Seitenkettentragenden Monomereinheit **M2** eine Gradientenstruktur aufweist.

Wie sich gezeigt hat, ergeben derartige Copolymere im Vergleich mit bekannten Dispergiermitteln einerseits sehr gute Verflüssigungswirkungen in mineralischen Bindemittelzusammensetzungen, welche zudem vergleichsweise länger aufrechterhalten bleibt. Gegenüber vergleichbaren Polymeren mir rein statistischer (= zufälliger) Verteilung der Monomereinheiten oder mit rein blockweiser Anordnung der Monomereinheiten können zum Teil signifikant bessere Verflüssigungsleistungen beobachtet werden. Zudem können die erfindungsgemässen Copolymere in einem effizienten Verfahren in unterschiedlichsten Modifikationen in zuverlässiger Art und Weise hergestellt werden. Die erfindungsgemässen Copolymere lassen sich also sehr flexibel und kontrolliert produzieren.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft ein Copolymer, insbesondere zur Verwendung als Dispergiermittel für Feststoffpartikel, im Besonderen zur Verwendung als Dispergiermittel für mineralische Bindemittelzusammensetzungen, mit einem Polymerrückgrat und daran gebundenen Seitenketten, umfassend wenigstens eine ionisierbare Monomereinheit **M1** sowie wenigstens eine Seitenketten-tragende Monomereinheit **M2,** wobei das Copolymer in wenigstens einem Abschnitt **A** in einer Richtung entlang des Polymerrückgrats bezüglich der ionisierbare Monomereinheit **M1** und/oder bezüglich der Seitenketten-tragenden Monomereinheit **M2** eine Gradientenstruktur aufweist.

Mit anderen Worten liegt beim erfindungsgemässen Copolymer im wenigstens einen Abschnitt **A** in einer Richtung entlang des Polymerrückgrats bezüglich der ionisierbare Monomereinheit **M1** und/oder bezüglich der Seitenkettentragenden Monomereinheit **M2** ein Konzentrationsgradient vor.

Der Begriff "Gradientenstruktur" oder "Konzentrationsgradient" steht vorliegend insbesondere für eine kontinuierliche Änderung der lokalen Konzentration einer Monomereinheit in wenigstens einem Abschnitt in einer Richtung entlang des Rückgrats des Copolymers. Eine andere Bezeichnung für "Konzentrationsgradient" ist "Konzentrationsgefälle".

Der Konzentrationsgradient kann z.B. im Wesentlichen konstant sein. Dies entspricht einer linearen Ab- oder Zunahme der lokalen Konzentration der jeweiligen Monomereinheit im wenigstens einen Abschnitt **A** entlang der Richtung des Rückgrats des Copolymers. Es ist aber möglich, dass sich der Konzentrationsgradient entlang der Richtung des Rückgrats des Copolymers ändert. In diesem Fall liegt eine nichtlineare Ab- oder Zunahme der lokalen Konzentration der jeweiligen Monomereinheit vor. Der Konzentrationsgradient erstreckt sich dabei insbesondere über wenigstens 10, insbesondere wenigstens 14, bevorzugt wenigstens 20 oder wenigstens 40, Monomereinheiten des Copolymers.

Im Gegensatz dazu werden abrupte bzw. sprunghafte Konzentrationsänderungen von Monomeren, wie sie z.B. bei Blockcopolymeren auftreten, nicht als Konzentrationsgradient bezeichnet.

Der Ausdruck "lokale Konzentration" bezeichnet im vorliegenden Zusammenhang die Konzentration eines bestimmten Monomers an einer vorgegebenen Stelle des Polymerrückgrats. In der Praxis lässt sich die lokale Konzentration bzw. der Mittelwert der lokalen Konzentration z.B. durch Bestimmung der Monomerumsätze während der Herstellung des Copolymers ermitteln. Hierbei können die in einem bestimmten Zeitraum umgesetzten Monomere ermittelt werden. Die gemittelte lokale Konzentration entspricht dabei insbesondere dem Verhältnis des Molanteils eines bestimmten im betrachteten Zeitraum umgesetzten Monomers zur Gesamtmolmenge der im betrachteten Zeitraum umgesetzten Monomere.

Die Umsätze der Monomere können z.B. mit Hilfe von Flüssigkeitschromatographie, insbesondere Hochleistungsflüssigkeitschromatographie (HPLC), und unter Berücksichtigung der eingesetzten Mengen an Monomeren in an sich bekannter Weise bestimmt werden.

Im Besonderen ist es auch möglich, die Struktur der Copolymere durch Kernspinresonanzspektroskopie (NMR-Spektroskopie) zu analysieren und zu bestimmen. Insbesondere durch ¹³C-NMR und ¹H⁻NMR-Spektroskopie lässt sich in an sich bekannter Weise aufgrund von Nachbargruppeneffekten im Copolymer und anhand von statistischen Auswertungen die Abfolge der Monomereinheiten im Copolymer bestimmen.

Das Copolymer kann auch mehr als einen Abschnitt **A** mit einer Gradientenstruktur aufweisen, insbesondere zwei, drei, vier oder noch mehr Abschnitte **A,** welche z.B. hintereinander angeordnet sind. Falls vorhanden, können in den verschiedenen Abschnitten **A** jeweils unterschiedliche Gradientenstrukturen oder Konzentrationsgefälle vorliegen.

Mit den Begriffen "ionisierbare Monomere" und "ionisierbare Monomereinheiten" sind insbesondere Monomere bzw. polymerisierte Monomere gemeint, welche bei einem pH-Wert > 10, insbesondere bei einem pH Wert > 12, in anionischer Form oder negativ geladen vorliegen. Dies sind insbesondere H-Donor-Gruppen oder Säuregruppen. Besonders bevorzugt sind die ionisierbaren Gruppen Säuregruppen, wie z.B. Carbonsäure-, Sulfonsäure-, Phosphorsäure- und/oder Phosphonsäuregruppen. Bevorzugt sind Carbonsäuregruppen. Die Säuregruppen können auch als Anionen in deprotonierter Form oder als Salz mit einem Gegenion bzw. Kation vorliegen.

Bevorzugt nimmt in dem wenigstens einen Abschnitt **A** eine lokale Konzentration der wenigstens einen ionisierbaren Monomereinheit **M1** entlang des Polymerrückgrats kontinuierlich zu, während eine lokale Konzentration der wenigstens einen Seitenketten-tragenden Monomereinheit **M2** entlang des Polymerrückgrats kontinuierlich abnimmt, oder umgekehrt.

Eine lokale Konzentration der ionisierbaren Monomereinheit **M1** am ersten Ende des wenigstens einen Abschnitts **A** ist insbesondere geringer als am zweiten Ende des Abschnitts **A,** während eine lokale Konzentration der Seitenketten-tragenden Monomereinheit **M2** am ersten Ende des Abschnitts **A** grösser ist als am zweiten Ende des Abschnitts **A,** oder umgekehrt.

Insbesondere gilt, dass bei einer Aufteilung des wenigstens einen Abschnitts **A** in 10 gleich lange Unterabschnitte, die gemittelte lokale Konzentration der wenigstens einen ionisierbaren Monomereinheit **M1** in den jeweiligen Unterabschnitten entlang des Polymerrückgrats in wenigstens 3, insbesondere in wenigstens 5 oder 8, aufeinanderfolgenden Unterabschnitten zunimmt, während die gemittelte lokale Konzentration der wenigstens einen Seitenketten-tragenden Monomereinheit **M2** in den jeweiligen Unterabschnitten entlang des Polymerrückgrats in wenigstens 3, insbesondere in wenigstens 5 oder 8, aufeinanderfolgenden Unterabschnitten abnimmt, oder umgekehrt.

Im Speziellen ist dabei eine Zunahme oder Abnahme der gemittelten lokalen Konzentration der wenigstens einen ionisierbaren Monomereinheit **M1** in den aufeinanderfolgenden Unterabschnitten im Wesentlichen konstant, während mit Vorteil eine Abnahme oder Zunahme der gemittelten lokalen Konzentration der wenigstens einen Seitenketten-tragenden Monomereinheit **M2** in den aufeinanderfolgenden Unterabschnitten im Wesentlichen ebenfalls konstant ist. Ein gewichtsgemitteltes Molekulargewicht M_{W} des gesamten Copolymers liegt insbesondere im Bereich von 10'000 - 150'000 g/mol, vorteilhafterweise 12'000 - 80'000 g/mol, speziell 12'000 - 50'000 g/mol. Im vorliegenden Zusammenhang werden Molekulargewichte, wie das gewichtsgemittelte Molekulargewicht M_{W} oder das zahlengemittelte Molekulargewicht Mₙ, durch Gel-Permeations-Chromatographie (GPC) mit Polyethylenglycol (PEG) als Standard bestimmt. Diese Technik ist dem Fachmann an sich bekannt.

Gemäss einer bevorzugten Ausführungsform ist die Polydispersität (= gewichtsgemitteltes Molekulargewicht M_{W} / zahlengemitteltes Molekulargewicht Mₙ) des Copolymers < 1.5. Insbesondere liegt die Polydispersität im Bereich von 1.0 - 1.4, speziell 1.1 - 1.3.

Der

Der wenigstens eine Abschnitt **A,** bezogen auf eine Gesamtanzahl an Monomereinheiten im Polymerrückgrat, weist einen Anteil von

mindestens 30%, insbesondere mindestens 50%, bevorzugt mindestens 75% oder 90%, an Monomereinheiten auf.

Im Besonderen verfügt der wenigstens eine Abschnitt **A,** bezogen auf das gewichtsgemittelte Molekulargewicht des gesamten Copolymers, über einen Gewichtsanteil von mindestens 30%, insbesondere mindestens 50%, bevorzugt mindestens 75% oder 90%.

Damit kommt der Abschnitt **A** mit dem Konzentrationsgradienten bzw. der Gradientenstruktur im besonderen Masse zum Tragen.

Der wenigstens eine Abschnitt **A** mit dem Konzentrationsgradienten umfasst mit Vorteil wenigstens 5 insbesondere wenigstens 7, bevorzugt wenigstens 10 Monomereinheiten **M1** und/oder wenigstens 5, insbesondere wenigstens 7, bevorzugt wenigstens 10, Monomereinheiten **M2.**

Der wenigstens eine Abschnitt **A** mit dem Konzentrationsgradienten umfasst mit Vorteil wenigstens 5 insbesondere wenigstens 7, bevorzugt wenigstens 10 Monomereinheiten **M1** und wenigstens 5, insbesondere wenigstens 7, bevorzugt wenigstens 10, Monomereinheiten **M2.** Der wenigstens eine Abschnitt **A** mit dem Konzentrationsgradienten umfasst mit Vorteil 5 - 70, insbesondere 7 - 40, bevorzugt 10 - 25 Monomereinheiten **M1** und 5 - 70, insbesondere 7 - 40, bevorzugt 10 - 25, Monomereinheiten **M2.**

Insbesondere besteht das Copolymer zu wenigstens 50 Mol-%, im Besonderen wenigstens 75 Mol-%, speziell wenigstens 90 Mol-% oder 95 Mol-%, aus ionisierbaren Monomereinheiten **M1** und Seitenketten-tragenden Monomereinheiten **M2.**

Vorteilhaft ist es, wenn wenigstens 30 Mol-%, insbesondere wenigstens 50 Mol-%, bevorzugt wenigstens 75 Mol-%, im Besonderen wenigstens 90 Mol-% oder wenigstens 95 Mol-%, der ionisierbaren Monomereinheiten **M1** im wenigstens einen Abschnitt **A,** welcher eine Gradientenstruktur aufweist, vorliegen.

Ebenfalls vorteilhaft liegen wenigstens 30 Mol-%, insbesondere wenigstens 50 Mol-%, bevorzugt wenigstens 75 Mol-%, im Besonderen wenigstens 90 Mol-% oder wenigstens 95 Mol-%, der Seitenketten-tragenden Monomereinheiten **M2** im wenigstens einen Abschnitt, welcher eine Gradientenstruktur aufweist, vor.

Speziell bevorzugt gelten die beiden letzten vorgenannten Bedingungen gleichzeitig.

In einer anderen vorteilhaften Ausführungsform verfügt das Copolymer zusätzlich zum wenigstens einen Abschnitt **A,** welcher eine Gradientenstruktur aufweist, über einen weiteren Abschnitt **B,** wobei über den gesamten Abschnitt **B** im Wesentlichen eine konstante lokale Konzentration der Monomere und/oder eine statistischen oder zufällige Verteilung der Monomere vorliegt. Abschnitt **B** kann z.B. aus Monomeren einer einzigen Sorte bestehen oder aus mehreren unterschiedlichen Monomeren, welche statistisch verteilt sind. Im Abschnitt **B** liegt jedoch insbesondere keine Gradientenstruktur bzw. kein Konzentrationsgradient entlang dem Polymerrückgrat vor.

Das Copolymer kann auch mehr als einen weiteren Abschnitt **B** aufweisen, z.B. zwei, drei, vier oder noch mehr Abschnitte **B,** welche sich in chemischer und/oder struktureller Hinsicht unterscheiden können.

Bevorzugt schliesst der wenigstens eine Abschnitt **A** unmittelbar an den weiteren Abschnitt **B** an.

Es hat sich überraschenderweise herausgestellt, dass derartige Copolymere im Hinblick auf die Verflüssigungswirkung und die Aufrechterhaltung derselben über die Zeit unter Umständen noch vorteilhafter sind.

Insbesondere umfasst der weitere Abschnitt **B** ionisierbare Monomereinheiten **M1** und/oder Seitenketten-tragende Monomereinheiten **M2.**

Bezogen auf sämtliche darin enthaltenen Monomereinheiten umfasst der weitere Abschnitt **B** in einer Ausführungsform der Erfindung z.B. vorteilhafterweise wenigstens 30 Mol-%, insbesondere wenigstens 50 Mol-%, bevorzugt wenigstens 75 Mol-%, im Besonderen wenigstens 90 Mol.-% oder wenigstens 95 Mol-%, ionisierbare Monomereinheiten **M1.** Ein allenfalls vorhandener Anteil von Seitenketten-tragenden Monomereinheiten **M2** im weiteren Abschnitt **B** ist dabei insbesondere kleiner als 25 Mol-%, speziell kleiner als 10 Mol-% oder kleiner als 5 Mol.-%, bezogen auf sämtliche Monomereinheiten **M1** im weiteren Abschnitt. Insbesondere liegen im weiteren Abschnitt **B** keine Seitenketten-tragenden Monomereinheiten **M2** vor.

Gemäss einer weiteren und besonders vorteilhaften Umsetzung der Erfindung umfasst der weitere Abschnitt **B,** bezogen auf sämtliche darin enthaltenen Monomereinheiten, wenigstens 30 Mol-%, insbesondere wenigstens 50 Mol-%, bevorzugt wenigstens 75 Mol-% im Besonderen wenigstens 90 Mol.-% oder wenigstens 95 Mol-%, Seitenketten-tragenden Monomereinheiten **M2.** In diesem Fall ist ein allenfalls vorhandener Anteil von ionisierbaren Monomereinheiten **M1** im weiteren Abschnitt **B** im Besonderen kleiner als 25 Mol-%, insbesondere kleiner 10 Mol-% oder kleiner als 5 Mol.-%, bezogen auf sämtliche Monomereinheiten **M2** im weiteren Abschnitt **B.** Insbesondere liegen im weiteren Abschnitt B keine ionisierbaren Monomereinheiten **M1** vor.

Es hat sich als zweckmässig erweisen, dass der weitere Abschnitt **B** insgesamt 5 - 70, insbesondere 7 - 40, bevorzugt 10 - 25 Monomereinheiten umfasst. Dabei handelt es sich insbesondere um Monomerneinheiten **M1** und/oder **M2,** Seitenketten-tragende Monomereinheiten **M2.**

Ein Verhältnis der Anzahl Monomereinheiten im wenigstens einen Abschnitt **A** mit Gradientenstruktur zur Anzahl Monomereinheiten im wenigstens einen weiteren Abschnitt **B** mit der im Wesentlichen konstanten lokalen Konzentration liegt mit Vorteil im Bereich von 99:1 - 1:99, insbesondere 10:90 - 90:10, bevorzugt 80:20 - 20:80, speziell 70:30 - 30:70.

Die Seitenketten-tragende Monomereinheit **M2** beinhaltet insbesondere Polyalkyenoxidseitenketten, insbesondere Polyethylenoxid- und/oder Polypropylenoxidseitenketten.

Die ionisierbare Monomereinheit **M1** umfasst bevorzugterweise Säuregruppen, insbesondere Carbonsäure-, Sulfonsäure-, Phosphorsäure- und/oder Phosphonsäuregruppen.

Die ionisierbare Monomereinheit M1 weist eine Struktur der FormeI auf,

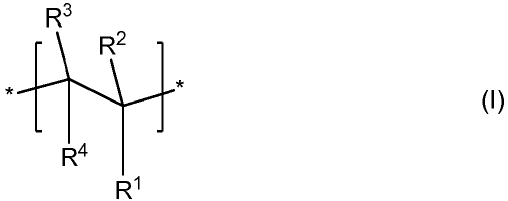

Die Seitenketten-tragende Monomereinheit **M2** beinhaltet eine Struktur der der Formel II 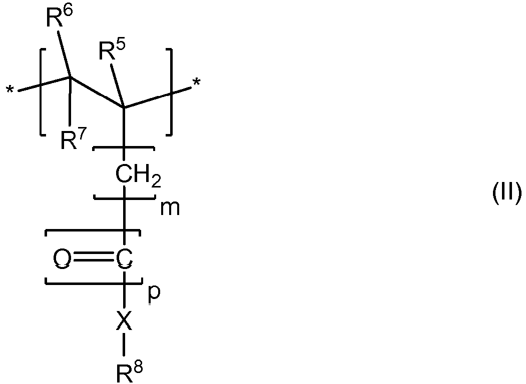 wobei
R¹, jeweils unabhängig voneinander, für -COOM, -SO₂-OM, -O-PO(OM)₂ und/oder -PO(OM)₂ steht,
R², R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
   oder wobei R¹ mit R⁴ einen Ring bildet zu -CO-O-CO-,
M, unabhängig voneinander, H⁺, ein Alkalimetallion, ein Erdalkalimetallion, ein zwei oder dreiwertiges Metallion, ein Ammoniumion oder eine organische Ammoniumgruppe darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, - Cycloalkylgruppe oder -Alkylarylgruppe steht,
und n = 2 - 250, insbesondere 10 - 200 ist.

Mit Vorteil liegt ein Molverhältnis der ionisierbaren Monomereinheiten **M1** zu den Seitenketten-tragenden Monomereinheiten **M2** im Copolymer im Bereich von 0.5 - 6, insbesondere 0.7 - 4, bevorzugt 0.9 - 3.8, weiter bevorzugt 1.0 - 3.7 oder 2 - 3.5. Dadurch wird eine optimale Dispergierwirkung in mineralischen Bindemittelzusammensetzungen erreicht.

Insbesondere sind R¹ = COOM, R² = H oder CH₃, R³ = R⁴ = H. Damit lässt sich das Copolymer auf der Basis von Acryl- oder Methacrylsäuremonomeren herstellen, was aus ökonomischer Sicht interessant ist. Zudem ergibt sich mit derartigen Copolymeren im vorliegenden Zusammenhang eine besonders gute Dispergierwirkung.

Ebenfalls vorteilhaft können Copolymere mit R¹ = COOM, R² = H, R³ = H und R⁴ = COOM sein. Solche Copolymere lassen sich auf der Basis von Maleinsäuremonomeren herstellen.

Die Gruppe X in der ionisierbaren Monomereinheit **M2** steht mit Vorteil bei wenigstens 75 Mol-%, insbesondere bei wenigstens 90 Mol-%, speziell bei wenigstens 95 Mol-% oder wenigstens 99 Mol-% aller Monomereinheiten **M2** für -O- (= Sauerstoffatom).

Vorteilhafterweise sind R⁵ = H oder CH₃, R⁶ = R¹ = H und X = -O-. Derartige Copolymere lassen sich z.B. ausgehend von (Meth)acrylsäureestern, Vinyl-, (Meth)allyl- oder Isoprenolethern herstellen.

Bei einer besonders vorteilhaften Ausführungsform stehen R² und R⁵ jeweils für Mischungen aus 40 - 60 Mol-% H und 40 - 60 Mol-% -CH₃.

Gemäss weiteren vorteilhaften Ausführungsform ist R¹ = COOM, R² = H, R⁵ = -CH₃ und R³ = R⁴ = R⁶ = R⁷ = H.

Bei einer anderen vorteilhaften Ausführungsform ist R¹ = COOM, R² = R⁵ = H oder -CH₃ und R³ = R⁴ = R⁶ = R⁷ = H.

Speziell vorteilhaft sind Copolymere bei welchen: R¹ = COOM; R² und R⁵ jeweils unabhängig voneinander, für H, -CH₃ oder Mischungen daraus stehen; R³ und R⁶ jeweils unabhängig voneinander gleich H oder -CH₃ sind, bevorzugt H; R⁴ und R⁷ jeweils unabhängig voneinander für H oder -COOM stehen, bevorzugt für H.

Der Rest R⁸ in der Seitenketten-tragenden Monomereinheit **M2** besteht, bezogen auf sämtliche Reste R⁸ im Copolymer, insbesondere zu wenigstens 50 Mol-%, insbesondere wenigstens 75 Mol-%, bevorzugt wenigstens 95 Mol- % oder wenigsten 99 Mol-%, aus einem Polyethylenoxid. Ein Anteil an Ethylenoxideinheiten bezogen auf sämtliche Alkylenoxideinheiten im Copolymer beträgt insbesondere mehr als 75 Mol-%, insbesondere mehr als 90 Mol-%, bevorzugt mehr als 95 Mol-% und im Speziellen 100 Mol-%.

Insbesondere weist R⁸ im Wesentlichen keine hydrophoben Gruppen auf, insbesondere keine Alkylenoxide mit drei oder mehr Kohlenstoffatomen. Damit ist insbesondere gemeint, dass ein Anteil an Alkylenoxiden mit drei oder mehr Kohlenstoffatomen bezogen auf sämtliche Alkylenoxide weniger als 5 Mol-%, insbesondere weniger als 2 Mol-%, bevorzugt weniger als 1 Mol-% oder weniger als 0.1 Mol-% beträgt. Im Besonderen liegen keine Alkylenoxide mit drei oder mehr Kohlenstoffatomen vor oder deren Anteil beträgt 0 Mol-%.

R^{a} steht mit Vorteil für H und/oder eine Methylgruppe. Besonders vorteilhaft ist A = C₂-Alkylen und R^{a} steht für H oder eine Methylgruppe.

Insbesondere ist der Parameter n = 10 - 150, insbesondere n = 15 - 100, bevorzugt n = 17 - 70, im Speziellen n = 19 - 45 oder n = 20 - 25. Im Besonderen in den genannten Vorzugsbereichen werden dadurch ausgezeichnete Dispergierwirkungen erzielt.

Weiter kann es vorteilhaft sein, wenn das Copolymer wenigstens eine weitere Monomereinheit **MS** umfasst, welche sich insbesondere von den Monomereinheiten **M1** und **M2** chemisch unterscheidet. Im Besonderen können mehrere unterschiedliche weitere Monomereinheiten **MS** vorliegen. Dadurch können die Eigenschaften des Copolymers weiter modifiziert und beispielsweise im Hinblick auf spezielle Anwendungen angepasst werden.

Besonders vorteilhaft ist die wenigstens eine weitere Monomereinheit **MS** eine Monomereinheit der Formel III: 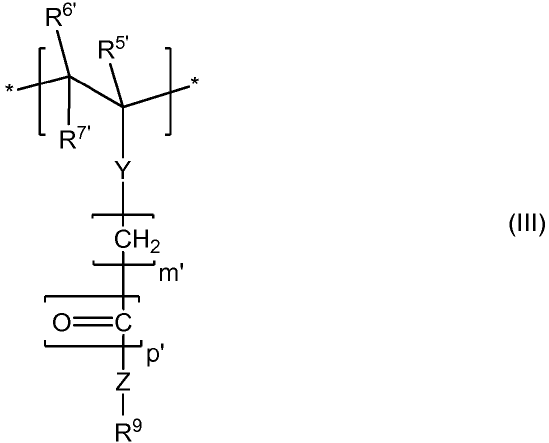 wobei
R^{5'}, R^{6'}, ^{7'}, m' und p' wie R⁵, R⁶, R⁷, m und p definiert sind;
Y, jeweils unabhängig voneinander, für eine chemische Bindung oder -O- steht;
Z, jeweils unabhängig voneinander, für eine chemische Bindung, -O- oder -NH- steht;
R⁹, jeweils unabhängig voneinander, für eine Alkylgruppe, Cycloalkylgruppe, Alkylarylgruppe, Arylgruppe, Hydroxyalkylgruppe oder eine Acetoxyalkylgruppe, jeweils mit 1 - 20 C-Atomen, steht.

Vorteilhaft sind z.B. weitere Monomereinheiten **MS** wobei m' = 0 ist, p' = 0 ist, Z und Y eine chemische Bindung darstellen und R⁹ für eine Alkylarylgruppe mit 6 - 10 C-Atomen steht.

Auch geeignet sind insbesondere weitere Monomereinheiten **MS** bei welchen m' = 0 ist, p' = 1 ist, Y für -O- steht, Z eine chemische Bindung darstellt und R⁹ für eine Alkylgruppe mit 1 - 4 C-Atomen steht.

Weiter sind weitere Monomereinheiten **MS** geeignet wobei m' = 0 ist, p' = 1 ist, Y für eine chemische Bindung steht, Z für -O- steht und R⁹ eine Alkylgruppe und/oder eine Hydroxyalkylgruppe mit 1 - 6 C-Atomen darstellt.

Besonders vorteilhaft besteht die wenigstens eine weitere Monomereinheit **MS** aus einpolymerisiertem Vinylacetat, Styrol und/oder Hydroxyalkyl(meth)acrylat, insbesondere Hydroxyethylacrylat.

Die wenigstens eine weitere Monomereinheit **MS** kann Bestandteil des wenigstens einen Abschnitts **A** und/oder des weiteren Abschnitts **B** sein. Auch möglich ist es, dass die wenigstens eine weitere Monomereinheit **MS** Bestandteil eines zusätzlichen Abschnitts des Copolymers ist. Insbesondere können in den verschiedenen Abschnitten unterschiedliche weitere Monomereinheiten **MS** vorliegen.

Falls im wenigstens einen Abschnitt **A** vorhanden, weist die wenigstens eine weitere Monomereinheit **MS** im wenigstens einen Abschnitt **A** mit Vorteil einen Anteil von 0.001 - 80 Mol-%, bevorzugt 20 - 75 Mol-%, speziell 30 - 70 Mol-%, bezogen auf sämtliche Monomereinheiten im ersten Abschnitt **A,** auf.

Sofern im weiteren Abschnitt **B** vorhanden weist die wenigstens eine weitere Monomereinheit **MS** im weiteren Abschnitt **B** insbesondere einen Anteil von 0.001 -80 Mol-%, bevorzugt 20 - 75 Mol-%, speziell 30 - 70 Mol-% oder 50 - 70 Mol-%, bezogen auf sämtliche Monomereinheiten im weiteren Abschnitt **B,** auf.

Gemäss einer vorteilhaften Ausführungsform ist im wenigstens einen Abschnitt **A** und/oder im weiteren Abschnitt **B** die wenigstens eine weitere Monomereinheit **MS** mit einem Anteil von Anteil von 20 - 75 Mol-%, speziell 30 - 70 Mol-%, bezogen auf sämtliche Monomereinheiten im jeweiligen Abschnitt, vorhanden.

Gemäss einer vorteilhaften Ausführungsform besteht das Copolymer aus dem wenigstens einen Abschnitt **A.** Bei einer anderen vorteilhaften Ausführungsform besteht das Copolymer aus dem wenigstens einen Abschnitt **A** und dem weiteren Abschnitt **B.** Insbesondere im letzteren Fall resultieren sehr gute und lange anhaltende Verflüssigungswirkungen.

Es ist aber beispielsweise auch möglich, dass das Copolymer, wenigstens zwei unterschiedliche Abschnitte **A** und/oder wenigstens zwei unterschiedliche weitere Abschnitte **B** enthält.

Ein besonders vorteilhaftes Copolymer weist wenigstens eines oder mehrere der folgenden Merkmale auf:
(i) Das Copolymer besteht zu wenigstens 75 Mol-%, speziell wenigstens 90 Mol-% oder 95 Mol-%, aus ionisierbaren Monomereinheiten **M1** und Seitenketten-tragenden Monomereinheiten **M2;**
(ii) Das Copolymer umfasst oder besteht aus wenigstens einem Abschnitt **A** und einen weiteren Abschnitt **B;**
(iii) Der weitere Abschnitt **B** umfasst Seitenketten-tragende Monomereinheiten **M2,** insbesondere wenigstens 50 Mol-%, bevorzugt wenigstens 75 Mol-% im Besonderen wenigstens 90 Mol.-% oder wenigstens 95 Mol-%, bezogen auf sämtliche im Abschnitt **B** enthaltenen Monomereinheiten. Ein allenfalls vorhandener Anteil von ionisierbaren Monomereinheiten **M1** im weiteren Abschnitt B ist kleiner als 25 Mol-%, insbesondere kleiner 10 Mol-% oder kleiner als 5 Mol.-%, bezogen auf sämtliche Monomereinheiten **M2** im weiteren Abschnitt **B.**
(iv) Ein Molverhältnis der Monomereinheiten **M1** zu den Monomereinheiten **M2** im Copolymer liegt im Bereich von 0.5 - 6, bevorzugt 0.8 - 3.5;
(v) R¹ steht für COOM;
(vi) R² und R⁵ stehen für H oder CH₃, bevorzugt CH₃;
(vii) R³ = R⁴ = R⁶ = R⁷ = H;
(viii) m = 0 und p = 1;
(ix) X = -O-
(x) A = C₂-Alkylen und n = 10 - 150, bevorzugt 15 - 50;
(xi) R^{a} = H oder -CH₃, bevorzugt CH₃;

Speziell bevorzugt ist ein Copolymer, bestehend aus den Abschnitten **A** und **B,** welches zumindest sämtliche Merkmale (i) - (iv) aufweist. Weiter bevorzugt ist dabei ein Copolymer welches sämtliche Merkmale (i) - (xi) aufweist. Noch weiter bevorzugt ist ein Copolymer welches sämtliche Merkmale (i) - (xi) in den jeweils bevorzugten Ausführungen realisiert.

Beim Copolymer handelt es sich im Besonderen um ein Polymer mit im Wesentlichen linearer Struktur. Damit ist im Besonderen gemeint, dass sämtliche Monomereinheiten des Copolymers in einer einzigen und/oder unverzweigten Polymerkette angeordnet sind. Im Speziellen verfügt das Copolymer nicht über eine sternförmige Struktur und/oder das Copolymer ist nicht Bestandteil eines verzweigten Polymers. Insbesondere ist das Copolymer nicht Bestandteil eines Polymers bei welchen an einem zentralen Molekül mehrere, insbesondere drei oder mehr, in unterschiedliche Richtungen verlaufende Polymerketten angebracht sind.

Das Copolymer kann in flüssiger oder fester Form vorliegen. Besonders bevorzugt liegt das Copolymer als Bestandteil einer Lösung oder Dispersion vor, wobei ein Anteil des Copolymers insbesondere 10 - 90 Gew.-%, bevorzugt 25 - 65 Gew.-% beträgt. Dadurch lässt sich das Copolymer beispielsweise sehr gut zu Bindemittelzusammensetzungen zugeben.

Entsprechend einer anderen vorteilhaften Ausführungsform liegt das Copolymer in festem Aggregatszustand vor, insbesondere in Form eines Pulvers, in Form von Pellets und/oder Platten. Dadurch wird insbesondere der Transport der Copolymere vereinfacht. Lösungen oder Dispersionen der Copolymere können z.B. durch Sprühtrocknung in den festen Aggregatszustand überführt werden.

Ein weiterer Aspekt der vorliegenden Erfindung betrifft ein Verfahren zur Herstellung eines Copolymers, insbesondere eines Copolymers wie es vorstehend beschrieben ist, wobei ionisierbare Monomere **m1** und Seitenketten-tragende Monomere **m2** unter Ausbildung eines Konzentrationsgradienten und/oder einer Gradientenstruktur zusammen polymerisiert werden.

Die ionisierbaren Monomere **m1** entsprechen nach erfolgter Polymerisation dabei den oben genannten ionisierbaren Monomereinheiten **M1** des Copolymers. Ebenso entsprechen die Seitenketten-tragenden Monomere **m2** nach erfolgter Polymerisation den oben beschriebenen Seitenketten-tragenden Monomereinheiten **M2.**

Insbesondere wird während der Polymerisation ein Molverhältnis von freien ionisierbaren Monomere **m1** zu freien Seitenketten-tragenden Monomeren **m2** wenigstens zeitweise verändert. Im Speziellen beinhaltet die Veränderung des Molverhältnisses eine kontinuierliche Änderung. Damit lässt sich in gut kontrollierbarer Weise ein Konzentrationsgradient bzw. eine Gradientenstruktur ausbilden.

Optional erfolgt zusätzlich eine schrittweise Änderung des Molverhältnisses der freien ionisierbaren Monomere **m1** zu den freien Seitenketten-tragenden Monomeren **m2.** Dies insbesondere zeitlich bevor die kontinuierliche Änderung durchgeführt wird. Dadurch ist z.B. ein Copolymer mit einem weiteren Abschnitt **B** erhältlich.

Gemäss einer bevorzugten Ausführungsform werden in einem ersten Schritt a) ein Teil der ionisierbaren Monomere **m1** im Wesentlichen in Abwesenheit von Seitenketten-tragenden Monomeren **m2** umgesetzt oder polymerisiert und nach Erreichen eines vorbestimmten Umsatzes in einem zweiten Schritt b) die noch nicht umgesetzten ionisierbaren Monomere **m1** zusammen mit den Seitenketten-tragenden Monomeren **m2** polymerisiert. Dadurch ist in einfacher und kostengünstiger Art und Weise ein Copolymer mit einem weiteren Abschnitt **B,** welcher im Wesentlichen aus polymerisierten ionisierbaren Monomeren **m1** besteht, herstellbar.

Ebenfalls vorteilhaft kann in einem ersten Schritt a) ein Teil der Seitenketten-tragenden Monomere **m2** im Wesentlichen in Abwesenheit von ionisierbaren Monomeren **m1** umgesetzt oder polymerisiert werden und nach Erreichen eines vorbestimmten Umsatzes in einem zweiten Schritt b) die noch nicht umgesetzten Seitenketten-tragenden Monomere **m2** zusammen mit den ionisierbaren Monomeren **m1** polymerisiert werden. Diese Variante ist besonders bevorzugt. Dadurch ist in einfacher und kostengünstiger Art und Weise ein Copolymer mit einem weiteren Abschnitt **B,** welcher im Wesentlichen aus polymerisierten Seitenketten-tragenden Monomere Monomeren **m2** besteht, erhältlich.

Dabei ist es vorteilhaft, die Schritte a) und b) unmittelbar aufeinander folgend durchzuführen. Dadurch können die Polymerisationsreaktion in den Schritten a) und b) bestmöglich aufrecht zu erhalten werden.

Die Polymerisation in Schritt a) wird insbesondere so lange durchgeführt, bis 0.1 - 85 Mol-%, insbesondere 1 - 74 Mol-%, bevorzugt 10 - 70 Mol-%, im Besonderen 25 - 70 Mol %, speziell 28 - 50 Mol-% oder 30 - 50 Mol-% der ionisierbaren Monomere **m1** bzw. der Seitenkettentragenden Monomere **m2** umgesetzt oder polymerisiert sind. Besonders vorteilhaft ist ein Umsatz von 40 - 45 Mol-%

Der Umsatz der Monomere **m1** und **m2** bzw. der Fortschritt der Polymerisation kann z.B. mit Hilfe von Flüssigkeitschromatographie, insbesondere Hochleistungsflüssigkeitschromatographie (HPLC), in an sich bekannter Weise kontrolliert werden.

Insbesondere weisen die ionisierbaren Monomere **m1** eine Struktur gemäss der Formel IV auf: 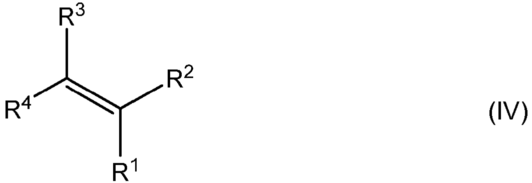 und die Seitenketten-tragenden Monomere **m2** verfügen über eine Struktur gemäss der Formel V: 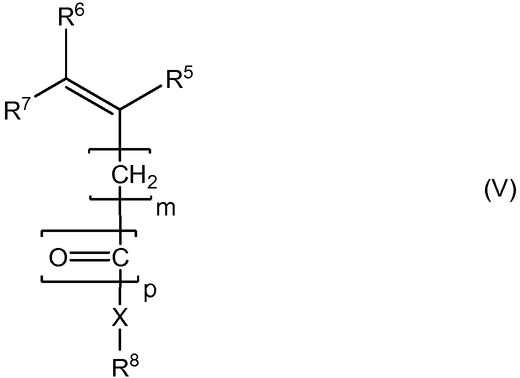 wobei R¹, R², R³, R⁴, R⁵, R⁶, R⁷, R⁸, m, p und X wie vorstehend beschrieben definiert sind.

Gemäss einer weiteren vorteilhaften Ausführungsform liegt während der Polymerisation oder während Schritt a) und/oder während Schritt b) wenigstens ein weiteres polymerisierbares Monomer **ms** vor, wobei es sich insbesondere um ein Monomer der Formel VI handelt: 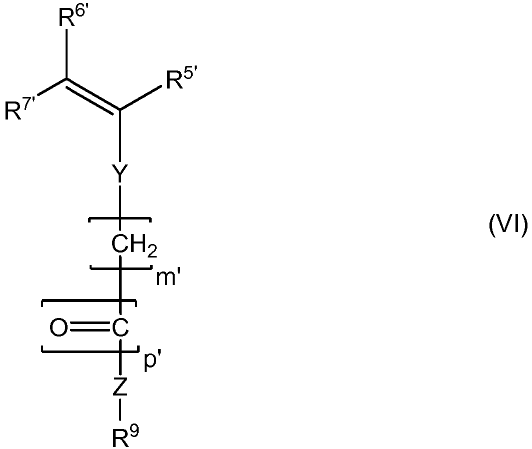 wobei R^{5'}, R^{6'}, R^{7'}, R⁹, m', p', Y und Z wie vorstehend definiert sind.

Das weitere Monomer **ms** entspricht nach erfolgter Polymerisation der oben beschriebenen weiteren Monomereinheit **MS.**

Besonders vorteilhaft ist das wenigstens eine weitere Monomer **ms** ausgewählt aus Vinylacetat, Styrol, N-vinyl-pyrrolidon und/oder Hydroxyalkyl(meth)acrylat, insbesondere Hydroxyethylacrylat.

Das Verfahren kann z.B. durchgeführt werden, indem in Schritt a) Monomere **m2** in einem Lösungsmittel, z.B. Wasser, vorgelegt und sodann zu einem weiteren Abschnitt **B** polymerisiert werden. Sobald der gewünschte Umsatz an Monomer **m2** erreicht ist (z.B. 30 - 45 Mol-%; siehe oben), werden ohne zeitliche Verzögerung in Schritt b) Monomere **m1** zugegeben und die Polymerisation fortgesetzt. Dabei werden die Monomere **m1** und die noch nicht umgesetzten Monomere **m2** an den bereits gebildeten Abschnitt B angefügt, wodurch ein Abschnitt **A** mit einer Gradientenstruktur gebildet wird. Die Polymerisation wird mit Vorteil wiederum so lange weitergeführt, bis der gewünschte Umsatz an Monomer **m1** (z.B. 75 - 95 Mol-%, insbesondere 80 - 92 Mol-%; siehe vorstehend) erreicht ist. Dadurch wird z.B. ein Copolymer umfassend einen Abschnitt **A** und einen damit verbundenen weiteren Abschnitt **B** erhalten.

Gemäss einer weiteren vorteilhaften Ausführungsform liegt in Schritt a) und/oder in Schritt b) wenigstens ein weiteres wie vorstehend beschriebenes polymerisierbares Monomer **ms** vor. Das wenigstens eine weitere polymerisierbare Monomer **ms** wird in diesem Fall insbesondere zusammen mit dem Monomer **m1** und/oder dem Monomer **m2** polymerisiert.

Es ist aber auch möglich, zusätzlich zu Schritt a) und Schritt b) einen weiteren Schritt c) der Polymerisation des wenigstens eines weiteren polymerisierbaren Monomer **ms** vorzusehen. Dadurch kann ein Copolymer mit einem zusätzlichen Abschnitt **C** hergestellt werden. Insbesondere kann Schritt c) zeitlich zwischen Schritt a) und Schritt b) durchgeführt. Damit wird der zusätzliche Abschnitt **C** räumlich zwischen den Abschnitten **A** und **B** angeordnet.

Es ist aber auch möglich, Schritt c) vor oder nach den Schritten Schritt a) und b) durchzuführen. Damit kann der zusätzliche Abschnitt **C** nach Abschnitt **A** oder vor Abschnitt **B** angeordnet werden.

Die Polymerisation erfolgt mit Vorteil durch eine kontrollierte freie radikalische Polymerisation und/oder durch eine lebende freie radikalische Polymerisation. Besonders bevorzugt ist eine Reversible Additions-Fragmentierungs Ketten-übertragungs-Polymerisation (RAFT).Eine radikalische Polymerisation kann grundsätzlich in drei Schritte aufgeteilt werden: Initiierung, Wachstum und Termination.

Die "lebende freie radikalische Polymerisation" wird auch als "kontrollierte freie radikalische Polymerisation" bezeichnet und ist dem Fachmann in anderen Zusammenhängen an sich bekannt. Der Begriff steht für Kettenwachstumsprozesse, bei denen im Wesentlichen keine Kettenabbruchsreaktionen (Transfer und Terminierung) stattfinden. Die lebende freie radikalische Polymerisation erfolgt somit im Wesentlichen unter Abwesenheit von irreversiblen Übertragungs- oder Abbruchreaktionen. Diese Kriterien können beispielsweise erfüllt werden, wenn der Polymerisationsinitiator schon sehr früh während der Polymerisation verbraucht ist und ein Austausch zwischen den verschieden reaktiven Spezies geben ist, der mindestens so schnell abläuft wie die Kettenfortpflanzung selbst. Die Zahl der aktiven Kettenenden bleibt während der Polymerisation insbesondere im Wesentlichen konstant. Dadurch wird ein im Wesentlichen zeitgleiches und während dem gesamten Polymerisationsprozess anhaltendes Wachstum der Ketten ermöglicht. Dies ergibt entsprechend eine enge Molekulargewichtsverteilung bzw. Polydispersität.

Mit anderen Worten zeichnet sich die kontrollierte radikalische Polymerisation oder die lebend radikalische Polymerisation im Besonderen durch reversible oder gar fehlende Abbruch- oder Übertragungsreaktionen aus. Nach der Initiierung bleiben demnach die aktiven Zentren während der ganzen Reaktion erhalten. Alle Polymerketten werden gleichzeitig gebildet (initiiert) und wachsen kontinuierlich über die gesamte Zeit. Die radikalische Funktionalität des aktiven Zentrums bleibt im Idealfall auch noch nach vollständigem Umsatz der zu polymerisierenden Monomere erhalten. Diese besondere Eigenschaft der kontrollierten Polymerisationen ermöglicht es, durch sequenzielle Zugabe von verschiedenen Monomeren wohldefinierte Strukturen wie Gradienten- oder Blockcopolymere herzustellen.

Im Gegensatz dazu laufen bei der herkömmlichen freien radikalischen Polymerisation wie sie z.B. in der EP 1 110 981 A2 (Kao) beschrieben ist, alle drei Schritte (Initiierung, Wachstum und Termination) parallel ab. Die Lebensdauer der aktiven, wachsenden Ketten ist jeweils sehr gering und die Monomerkonzentration während des Kettenwachstums einer Kette bleibt im Wesentlichen konstant. Die so gebildeten Polymerketten verfügen über keine aktiven Zentren die für eine Anlagerung weiterer Monomere geeignet sind. Dieser Mechanismus lässt also keine Kontrolle über die Struktur der Polymere zu. Die Darstellung von Gradienten- oder Blockstrukturen mittels konventioneller freier radikalischer Polymerisation ist daher üblicherweise nicht möglich (siehe z.B. "Polymere: Synthese, Synthese und Eigenschaften"; Autoren: Koltzenburg, Maskos, Nuyken; Verlag: Springer Spektrum; ISBN: 97-3-642-34772-6 sowie "Fundamentals of Controlled/living Radical Polymerization"; Verlag: Royal Society of Chemistry; Editoren: Tsarevsky, Sumerlin; ISBN: 978-1-84973-425-7).

Somit unterscheidet sich die "lebende freie radikalische Polymerisation" klar von der herkömmlichen "freien radikalischen Polymerisation" bzw. der nicht lebend bzw. nicht kontrolliert durchgeführten freien Polymerisation.

Bei der reversiblen Additions-Fragmentierungs-Kettenübertragungs-Polymerisation (RAFT) wird die Kontrolle der Polymerisation wird durch eine reversible Kettenübertragungsreaktionen erreicht. Konkret addiert eine wachsende Radikalkette ein sogenannte RAFT-Agens, was zur Bildung eines intermediären Radikals führt. Das RAFT-Agens fragmentiert sodann und zwar so, dass erneut ein RAFT-Agens und ein für die Propagation zur Verfügung stehendes Radikal zurückgebildet werden. Auf diese Weise wird die Propagationswahrscheinlichkeit über alle Ketten gleichverteilt. Die durchschnittliche Kettenlänge des gebildeten Polymers ist proportional zur RAFT-Agens Konzentration sowie zum Reaktionsumsatz. Als RAFT-Agentien werden insbesondere organische Schwefelverbindungen verwendet. Im Besonderen geeignet sind Dithioester, Dithiocarbamate, Trithiocarbonate und/oder Xanthate. Die Initiierung der Polymerisation kann auf konventionellem Weg mittels Initiatoren oder thermischer Selbstinitiierung erfolgen.

Bevorzugt erfolgen die Polymerisation oder die Schritte a) und/oder b) in einer wässrigen Lösung. Insbesondere erfolgen die Polymerisationen in beiden Schritten a) und b) in wässrigen Lösungen. Dies gilt entsprechend auch für Schritt c), sofern dieser durchgeführt wird. Wie es sich gezeigt hat, wirkt sich dies positiv auf die Dispergierwirkung des Copolymers aus.

Es ist aber auch möglich andere Lösungsmittel vorzusehen, beispielsweise Ethanol.

Als Initiator für die Polymerisation wird insbesondere ein Radikalstarter, bevorzugt eine Azoverbindung und/oder ein Peroxid eingesetzt. Geeignete Peroxide sind z.B. ausgewählt aus der Gruppe bestehend aus Dibenzoylperoxid (DBPO), Di-tert-butylperoxid und Diacetylperoxid.

Besonders vorteilhaft als Initiator ist eine Azoverbindung, wie beispielsweise Azobisisobutyronitril (AIBN), *α,α'*-Azodiisobutyramidine dihydrochloride (AAPH) oder Azo-bis-isobutyramidin (AIBA). Andere Radikalstarter, z.B. Natriumpersulfat oder Di-tert-butylhyponitrit, können unter Umständen aber auch verwendet werden.

Falls die Polymerisation in einer wässrigen Lösung oder in Wasser erfolgt, wird mit Vorteil *α,α'*-Azodiisobutyramidine dihydrochloride (AAPH) als Initiator verwendet.

Bevorzugt sind während der Polymerisation oder in den Schritten a) und/oder b) einer oder mehrere Vertreter aus der Gruppe bestehend aus Dithioester, Dithiocarbamate, Trithiocarbonate und Xanthate anwesend. Dies sind sogenannte "RAFT-Agentien", welche es ermöglichen, den Polymerisationsprozess zu kontrollieren. Dies gilt entsprechend auch für Schritt c), sofern dieser durchgeführt wird.

Insbesondere erfolgt die Polymerisation oder Schritt a), Schritt b) und/oder Schritt c) bei einer Temperatur in Bereich von 50 - 95°C, insbesondere 70 - 90°C.

Vorteilhafterweise wird unter Inertgasatmosphäre gearbeitet, z.B. unter Stickstoffatmosphäre.

Ein weiterer Aspekt der vorliegenden Erfindung beinhaltet ein Copolymer, welches erhältlich ist durch das vorstehend beschrieben Verfahren.

Zudem betrifft die vorliegende Erfindung die Verwendung eines wie vorstehend beschriebenen Copolymers als Dispergiermittel für Feststoffpartikel.

Der Begriff "Feststoffpartikel" steht dabei für Partikel aus anorganischen und/oder organischen Materialen. Im Besonderen handelt es sich um anorganische und/oder mineralische Partikel.

Besonders vorteilhaft wird das Copolymer verwendet als Dispergiermittel für mineralische Bindemittelzusammensetzungen. Das Copolymer kann insbesondere zur Verflüssigung, zur Wasserreduktion und/oder zur Verbesserung der Verarbeitbarkeit einer mineralischen Bindemittelzusammensetzung eingesetzt werden.

Insbesondere kann das Copolymer zur Verlängerung der Verarbeitbarkeit einer mineralischen Bindemittelzusammensetzung eingesetzt werden.

Weiter betrifft die vorliegende Erfindung zudem eine mineralische Bindemittelzusammensetzung, enthaltend mindestens ein wie vorstehend beschriebenes Copolymer.

Die mineralische Bindemittelzusammensetzung enthält zumindest ein mineralisches Bindemittel. Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%. Insbesondere ist der Zement vom Typ CEM I, CEM II, CEM III, CEM IV oder CEM V (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu ≥ 95 Gew.-% aus hydraulischem Bindemittel, insbesondere aus Zement oder Zementklinker.

Es kann aber auch vorteilhaft sein, wenn das mineralische Bindemittel oder die mineralische Bindemittelzusammensetzung andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalkstein, Quarzmehle und/oder Pigmente enthalten. In einer vorteilhaften Ausführungsform enthält das mineralische Bindemittel 5 - 95 Gew.-%, insbesondere 5 - 65 Gew.-%, besonders bevorzugt 15 - 35 Gew.-%, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, des hydraulischen Bindemittels vorliegen.

Bei der mineralischen Bindemittelzusammensetzung handelt es sich bevorzugt um eine Mörtel- oder Betonzusammensetzung.

Die mineralische Bindemittelzusammensetzung ist insbesondere eine verarbeitbare und/oder mit Wasser angemachte mineralische Bindemittelzusammensetzung.

Ein Gewichtsverhältnis von Wasser zu Bindemittel in der mineralischen Bindemittelzusammensetzung liegt bevorzugt im Bereich von 0.25 - 0.7, insbesondere 0.26 - 0.65, bevorzugt 0.27 - 0.60, im Speziellen 0.28 - 0.55.

Das Copolymer wird mit Vorteil mit einem Anteil von 0.01 - 10 Gew.-%, insbesondere 0.1 - 7 Gew.-% oder 0.2 - 5 Gew.-%, bezogen auf den Bindemittelgehalt, eingesetzt. Der Anteil des Copolymers bezieht sich dabei auf das Copolymer an sich. Bei einem Copolymer in Form einer Lösung ist entsprechend der Feststoffgehalt massgebend.

Ein zusätzlicher Aspekt der vorliegenden Erfindung bezieht sich auf einen Formkörper, insbesondere ein Bestandteil eines Bauwerks, erhältlich durch Aushärten einer wie vorstehend beschriebenen mineralischen Bindemittelzusammensetzung enthaltend ein Copolymer nach Zugabe von Wasser. Ein Bauwerk kann z.B. eine Brücke, ein Gebäude, ein Tunnel, eine Fahrbahn, oder ein Start- und Landebahn sein.

Aus den nachfolgenden Ausführungsbeispielen ergeben sich weitere vorteilhafte Ausführungsformen der Erfindung.

### Kurze Beschreibung der Zeichnung

Die zur Erläuterung der Ausführungsbeispiele verwendeten Figuren zeigen:
- Fig.1:: Den zeitlichen Verlauf der Monomerenumsätze bei der Herstellung eines erfindungsgemässen Copolymers (**P1**);
- Fig. 2:: Eine schematische Darstellung einer möglichen Struktur eines Copolymers, welche sich aus den Umsätzen gemäss Fig. 1 ableiten lässt.

### Ausführungsbeispiele

### 1. Herstellungsbeispiele für Polymere

### 1.1 Referenzpolymer R1 (Vergleichsbeispiel, Blockcopolymer)

Zur Herstellung eines Blockcopolymers mittels RAFT-Polymerisation werden in einem Rundkolben, ausgestattet mit einem Rückflusskühler, Rührwerk, Thermometer und einem Gaseinleitungsrohr 57.4 g 50 %-iges Methoxy-Polyethylenglykol1000-Methacrylat (0.03 mol) und 22 g deionisiertes Wasser vorgelegt. Das Reaktionsgemisch wird unter kräftigem Rühren auf 80°C erwärmt. Ein leichter N2-Inertgasstrom wird während des Aufwärmens und der ganzen restlichen Reaktionsdauer durch die Lösung geführt. Zum Gemisch werden nun 378 mg 4-Cyano-4-(thiobenzoyl)pentansäure (1.35 mmol) gegeben. Nachdem sich die Substanz vollständig gelöst hat, werden 67 mg AIBN (0.41 mmol) zugegeben. Von nun an wird der Umsatz mittels HPLC regelmässig bestimmt.

Sobald die Umsetzung, bezogen auf Methoxy-Polyethylenglykol-Methacrylat, 90 Mol-% beträgt, werden 4.66 g Methacrylsäure (0.05 mol) zugegeben. Das Gemisch für weitere 4 h reagieren und anschliessend abkühlen gelassen. Zurück bleibt eine klare, rötliche, wässrige Lösung mit einem Feststoffgehalt von rund 40%.

Das so erhaltene Copolymer wird als Referenzpolymer **R1** bezeichnet und weist aufgrund der nahezu vollständigen Umsetzung des Methoxy-Polyethylenglykol-Methacrylats (90 Mol-%) eine Blockstruktur auf, bei welcher die Seitenketten-tragenden Monomereinheiten (Methoxy-Polyethylenglykol-Methacrylat) in einem ersten Block und die ionisierbaren Monomereinheiten (Methacrylsäure) im Wesentlichen räumlich getrennt in einem zweiten Block vorliegen.

### 1.2 Referenzpolymer R2 (Vergleichsbeispiel, statistisches Polymer)

In einem Reaktionsgefäss werden 1.4 g Natriumhypophosphit und 36 g deionisiertes Wasser vorgelegt. Die Reaktionslösung wird auf 80°C erwärmt. Zu dieser Lösung wird innert 120 min eine Mischung aus 108.3 g 50 %-iges Methoxy-Polyethylenglykol1000-Methacrylat, 8.6 g Methacrylsäure und 20 g Wasser zugetropft. Gleichzeitig wir innert 130 min eine Lösung aus 0.89 g Natriumpersulfat und 20 g Wasser zugetropft. Nach Beendigung wir die Lösung abgekühlt. Zurück bleibt ein leicht gelbliches, leicht viskoses Polymer.

Das so erhaltene Copolymer wird als Referenzpolymer **R2** bezeichnet und weist eine statistische bzw. zufällige Verteilung der Monomereinheiten (Methoxy-Polyethylenglykol-Methacrylateinheiten und Methacrylsäureeinheiten) auf.

### 1.3 Copolymer P1

Zur Herstellung des Gradientpolymers mittels RAFT-Polymerisation werden in einem Rundkolben, ausgestattet mit einem Rückflusskühler, Rührwerk, Thermometer und einem Gaseinleitungsrohr 57.4 g 50 %-iges Methoxy-Polyethylenglykol1000-Methacrylat (0.03 mol) und 22 g deionisiertes Wasser vorgelegt. Das Reaktionsgemisch wird unter kräftigem Rühren auf 80°C erwärmt. Ein leichter N2-Inertgasstrom wird während des Aufwärmens und der ganzen restlichen Reaktionsdauer durch die Lösung geführt. Zum Gemisch werden nun 378 mg 4-Cyano-4-(thiobenzoyl)pentansäure (1.35 mmol) gegeben. Nachdem sich die Substanz vollständig gelöst hat, werden 67 mg AIBN (0.41 mmol) zugegeben. Von nun an wird der Umsatz mittels HPLC regelmässig bestimmt.

Sobald die Umsetzung, bezogen auf Methoxy-Polyethylenglykol-Methacrylat, 65 Mol-% beträgt, werden innert 20 min 4.66 g Methacrylsäure (0.05 mol) gelöst in 20 g H₂O zugtropft. Nach Beendigung wird das Gemisch für weitere 4 h reagieren und anschliessend abkühlen gelassen. Zurück bleibt eine klare, leicht rötliche, wässrige Lösung mit einem Feststoffgehalt von rund 35%. Das so erhaltene Copolymer mit Gradientenstruktrur wird als Copolymer **P1** bezeichnet.

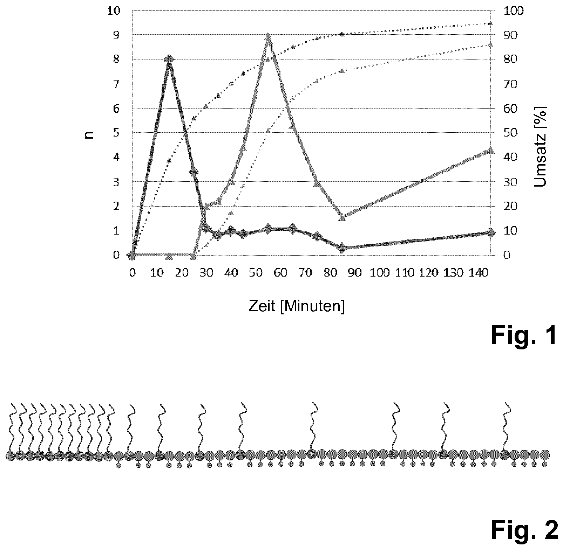

In Fig. 1 ist der zeitliche Verlauf der Monomerenumsätze bei der Herstellung des Copolymers **P1** dargestellt. Die Monomerenumsätze wurden zu den in Fig. 1 angegebenen Zeiten während der Herstellung des Copolymers durch Hochleistungsflüssigkeitschromatographie (HPLC) in an sich bekannter Weise bestimmt. Die obere gepunktete Kurve, welche im Ursprung zum Zeitpunkt t = 0 Minuten beginnt, stellt den prozentualen Umsatz der Methoxy-Polyethylenglykol-Methacrylat-Monomere (= Seitenketten-tragenden Monomere **m2**) dar (Skala rechts). Die untere gepunktete Kurve, welche zum Zeitpunkt t = 25 Minuten beginnt, stellt den prozentualen Umsatz der Methacrylsäure-Monomere (= ionisierbaren Monomere **m1**) dar (Skala rechts). Die ausgezogene Linie mit den rautenförmigen Punkten gibt die Anzahl an Seitenketten-tragenden Monomere **m2** an, welche seit dem vorangehenden Messpunkt polymerisiert wurden (= n(**M2**); linke Skala). Entsprechend stellt die ausgezogene Linie mit den dreieckförmigen Punkten die Anzahl an ionisierbaren Monomeren **m1** dar, welche seit dem vorangehenden Messpunkt polymerisiert wurden (= n(**M1**); linke Skala).

Berechnet man aus den Angaben in Fig. 1 für den Zeitraum von 0 bis 55 Minuten zum jeweiligen Zeitpunkt das Verhältnis n(**M2**)/[n(**M1**) + n(**M2**)] sowie n(**M1**)/[n(**M1**) + n(**M2**)], ergeben sich folgend Werte:

**Tabelle 1: Monomerenverhältnisse während der Herstellung des Copolymers P1.**

| Zeitpunkt | n(**M2**)/[n(**M1**) + n(**M2**)] | n(**M1**)/[n(**M1**) + n(**M2**)] |
|---|---|---|
| 15 | 100% | 0% |
| 25 | 100% | 0% |
| 30 | 33% | 67% |
| 35 | 29% | 71% |
| 40 | 25% | 75% |
| 45 | 17% | 83% |
| 55 | 10% | 90% |

Aus Tabelle 1 ist ersichtlich, dass bei der Herstellung des Copolymers **P1** während den ersten 25 Minuten ein Abschnitt bestehend aus 100% Seitenketten-tragenden Monomereinheiten **M2** gebildet wird und anschliessend ein Abschnitt in welchem der Anteil an Seitenketten-tragenden Monomereinheiten **M2** kontinuierlich abnimmt, während der Anteil an ionisierbaren Monomereinheiten **M1** kontinuierlich zunimmt.

In Fig. 2 ist zudem eine mögliche Struktur des Copolymers **P1** schematisch dargestellt. Diese lässt sich unmittelbar aus den in Fig. 1 genannten Umsätzen herleiten. Die Seitenketten-tragenden Monomereinheiten **M2** (= polymerisierte Methoxy-Polyethylenglykol-Methacrylat-Monomere) sind dabei als Kreis mit gewundenem Fortsatz dargestellt. Die ionisierbaren Monomereinheiten **M1** sind als hantelförmige Symbole dargestellt.

Aus Fig. 2 ist ersichtlich, dass Copolymer **P1** eine ersten Abschnitt A mit Gradientenstruktur sowie einen weiteren Abschnitt **B,** bestehend im Wesentlichen aus Seitenketten-tragenden Monomereinheiten, umfasst.

### 1.4 Copolymer P2

Zur Herstellung des Gradientpolymers mittels RAFT-Polymerisation werden in einem Rundkolben, ausgestattet mit einem Rückflusskühler, Rührwerk, Thermometer und einem Gaseinleitungsrohr 57.4 g 50 %-iges Methoxy-Polyethylenglykol1000-Methacrylat (0.03 mol) und 22 g deionisiertes Wasser vorgelegt. Das Reaktionsgemisch wird unter kräftigem Rühren auf 80°C erwärmt. Ein leichter N2-Inertgasstrom wird während des Aufwärmens und der ganzen restlichen Reaktionsdauer durch die Lösung geführt. Zum Gemisch werden nun 378 mg 4-Cyano-4-(thiobenzoyl)pentansäure (1.35 mmol) gegeben. Nachdem sich die Substanz vollständig gelöst hat, werden 67 mg AIBN (0.41 mmol) zugegeben. Von nun an wird der Umsatz mittels HPLC regelmässig bestimmt.

Sobald die Umsetzung, bezogen auf Methoxy-Polyethylenglykol-Methacrylat, 45 Mol-% beträgt, werden innert 20 min 4.66 g Methacrylsäure (0.05 mol) gelöst in 20 g H₂O zugtropft. Nach Beendigung wird das Gemisch für weitere 4 h reagieren und anschliessend abkühlen gelassen. Zurück bleibt eine klare, leicht rötliche, wässrige Lösung mit einem Feststoffgehalt von rund 35%. Das so erhaltene Copolymer mit Gradientenstruktrur wird als Copolymer **P2** bezeichnet.

### 1.5 Copolymer P3

Zur Herstellung des Gradientpolymers mittels RAFT-Polymerisation werden in einem Rundkolben, ausgestattet mit einem Rückflusskühler, Rührwerk, Thermometer und einem Gaseinleitungsrohr 57.4 g 50 %-iges Methoxy-Polyethylenglykol1000-Methacrylat (0.03 mol) und 22 g deionisiertes Wasser vorgelegt. Das Reaktionsgemisch wird unter kräftigem Rühren auf 80°C erwärmt. Ein leichter N2-Inertgasstrom wird während des Aufwärmens und der ganzen restlichen Reaktionsdauer durch die Lösung geführt. Zum Gemisch werden nun 378 mg 4-Cyano-4-(thiobenzoyl)pentansäure (1.35 mmol) gegeben. Nachdem sich die Substanz vollständig gelöst hat, werden 67 mg AIBN (0.41 mmol) zugegeben. Von nun an wird der Umsatz mittels HPLC regelmässig bestimmt.

Sobald die Umsetzung, bezogen auf Methoxy-Polyethylenglykol-Methacrylat, 30 Mol-% beträgt, werden innert 20 min 4.66 g Methacrylsäure (0.05 mol) gelöst in 20 g H₂O zugtropft. Nach Beendigung wird das Gemisch für weitere 4 h reagieren und anschliessend abkühlen gelassen. Zurück bleibt eine klare, leicht rötliche, wässrige Lösung mit einem Feststoffgehalt von rund 35 %. Das so erhaltene Copolymer mit Gradientenstruktrur wird als Copolymer **P3** bezeichnet.

### 2. Mörtelmischungen

### 2.1 Herstellung

Die zu Testzwecken eingesetzte Mörtelmischung weist die in Tabelle 2 beschriebene Trockenzusammensetzung auf:

**Tabelle 2: Trockenzusammensetzung Mörtelmischung**

| **Komponente** | **Menge [g]** |
|---|---|
| Zement (CEM I 42.5 N; Normo 4; erhältlich bei Holcim Schweiz) | 750 g |
| Kalksteinfüller | 141 g |
| Sand 0-1 mm | 738 g |
| Sand 1-4 mm | 1107 g |
| Sand 4-8 mm | 1154 g |

Zum Anmachen einer Mörtelmischung wurden die Sande, der Kalksteinfüller und der Zement 1 Minute in einem Hobart-Mischer trocken gemischt. Innerhalb von 30 Sekunden wurde das Anmachwasser (Verhältnis Wasser zu Zement w/z = 0.49), dem vorgängig das jeweilige Polymer (Anteil: 0.24 Gew.-%; bezogen auf Feststoffgehalt des Polymers und bezogen auf Zementgehalt) beigemischt wurde, zugegeben und noch weitere 2.5 Minuten gemischt. Die Gesamtmischzeit nass dauerte jeweils 3 Minuten.

### 2.2 Mörteltests

Zur Bestimmung der Dispergierwirkung der Polymere wurde jeweils das Ausbreitmass (ABM) von angemachten Mörtelmischungen zu verschiedenen Zeiten gemessen. Das Ausbreitmass (ABM) des Mörtels wurde gemäss EN 1015-3 bestimmt.

### 2.3 Resultate der Mörteltests

Tabelle 3 gibt eine Übersicht über die durchgeführten Mörteltests und die dabei erzielten Resultate. Versuch **V1** ist ein zu Vergleichszwecken durchgeführter Nullversuch ohne Zugabe eines Polymers.

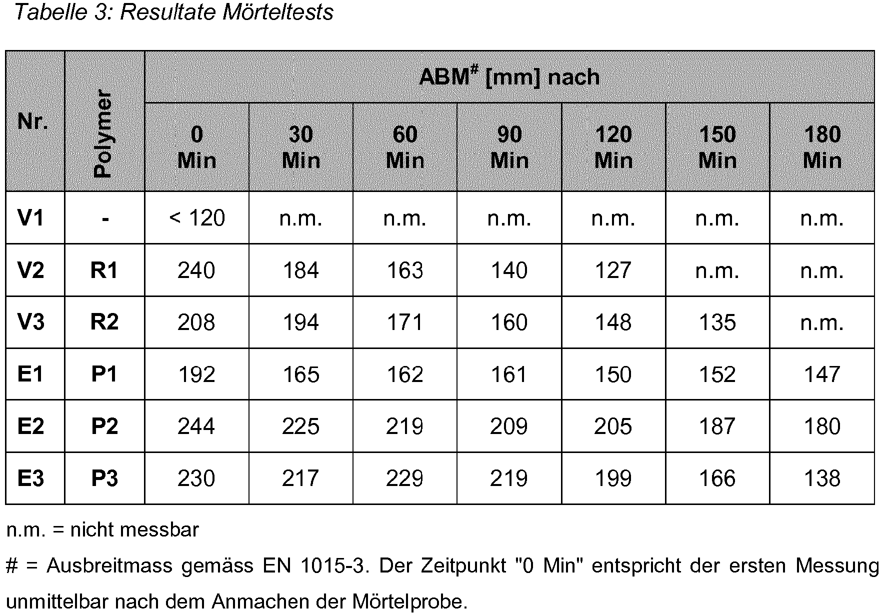

Ein Vergleich der Versuche zeigt, dass sämtliche Copolymere **P1** - **P3** mit Gradientenstruktur eine gute, lang und anhaltende Verflüssigungswirkung zeigen. Dies gilt insbesondere für Copolymer **P2.** Im Vergleich dazu schneiden die Copolymere **R1** und **R2,** welche eine reine Blockstruktur bzw. eine statistische Monomerenverteilung aufweisen, deutlich schlechter ab.

Aus den präsentierten Resultaten lässt sich somit schliessen, dass die erfindungsgemässen Copolymere in verschiedener Hinsicht vorteilhaft gegenüber bekannten Polymeren sind. Insbesondere können mit den erfindungsgemässen Polymeren hohe Dispergier- und Verflüssigungswirkungen erreicht werden, welche sich auch über vergleichsweise lange Zeit auf einem für die Praxis interessanten Niveau aufrechterhalten lassen.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Copolymer, insbesondere zur Verwendung als Dispergiermittel für Feststoffpartikel, im Besonderen zur Verwendung als Dispergiermittel für mineralische Bindemittelzusammensetzungen, mit einem Polymerrückgrat und daran gebundenen Seitenketten, umfassend wenigstens eine ionisierbare Monomereinheit **M1** sowie wenigstens eine Seitenketten-tragende Monomereinheit **M2, dadurch gekennzeichnet, dass** das Copolymer in wenigstens einem Abschnitt **A** in einer Richtung entlang des Polymerrückgrats bezüglich der ionisierbare Monomereinheit **M1** und/oder bezüglich der Seitenketten-tragenden Monomereinheit **M2** eine Gradientenstruktur aufweist, wobei die ionisierbare Monomereinheit **M1** eine Struktur der Formel I aufweist, 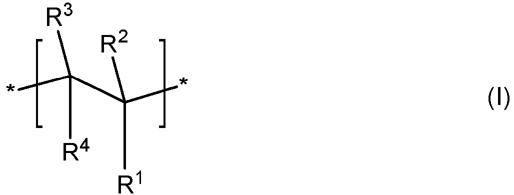
und die Seitenketten-tragende Monomereinheit **M2** eine Struktur der Formel II beinhaltet 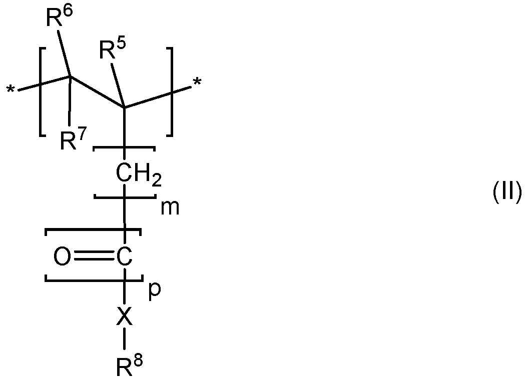
wobei
R¹, jeweils unabhängig voneinander, für -COOM, -SO₂-OM, -O-PO(OM)₂ und/oder -PO(OM)₂ steht,
R², R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
oder wobei R¹ mit R⁴ einen Ring bildet zu -CO-O-CO-,
M, unabhängig voneinander, H⁺, ein Alkalimetallion, ein Erdalkalimetallion, ein zwei oder dreiwertiges Metallion, ein Ammoniumion oder eine organische Ammoniumgruppe darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, -Cycloalkylgruppe oder -Alkylarylgruppe steht,
und n = 2 - 250, insbesondere 10 - 200 ist;
wobei der wenigstens eine Abschnitt **A** mit der Gradientenstruktur, einen Anteil von mindestens 30% an Monomereinheiten aufweist, bezogen auf eine Gesamtanzahl an Monomereinheiten im Polymerrückgrat.

2. Copolymer nach Anspruch 1, wobei die Polydispersität des Copolymers < 1.5 ist und insbesondere im Bereich von 1.0 - 1.4, speziell 1.1 - 1.3, liegt.

3. Copolymer nach wenigstens einem der Ansprüche 1 - 2, **dadurch gekennzeichnet, dass** der wenigstens eine Abschnitt **A** mit der Gradientenstruktur, einen Anteil von mindestens 50%, bevorzugt mindestens 75% oder 90%, an Monomereinheiten aufweist, bezogen auf eine Gesamtanzahl an Monomereinheiten im Polymerrückgrat.

4. Copolymer nach wenigstens einem der Ansprüche 1 - 3, **dadurch gekennzeichnet, dass** das Copolymer zusätzlich zum wenigstens einen Abschnitt **A** einen weiteren Abschnitt **B** mit einer im Wesentlichen konstanten lokalen Konzentration an Monomeren und/oder einer zufälligen Verteilung an Monomeren aufweist, wobei der weitere Abschnitt **B** ionisierbare Monomereinheiten **M1** und/oder Seitenketten-tragenden Monomereinheiten **M2** umfasst.

5. Copolymer nach Anspruch 4, **dadurch gekennzeichnet, dass** der weitere Abschnitt **B** mit der im Wesentlichen konstanten lokalen Konzentration, bezogen auf sämtliche darin enthaltenen Monomereinheiten, wenigstens 30 Mol-%, insbesondere wenigstens 50 Mol-%, bevorzugt wenigstens 75 Mol-%, im Besonderen wenigstens 90 Mol-% oder wenigstens 95 Mol-%, Seitenketten-tragenden Monomereinheiten **M2** umfasst und wobei ein allenfalls vorhandener Anteil von ionisierbaren Monomereinheiten **M1** im weiteren Abschnitt kleiner als 25 Mol-%, insbesondere kleiner gleich 10 Mol-% oder kleiner als 5 Mol.-%, ist, bezogen auf sämtliche Monomereinheiten **M2** im weiteren Abschnitt.

6. Copolymer wenigstens einem der Ansprüche 1 - 5, **dadurch gekennzeichnet, dass** R¹ = COOM ist; R² und R⁵, unabhängig voneinander, für H, -CH₃ oder Mischungen daraus stehen; R³ und R⁶, unabhängig voneinander, für H oder -CH₃, bevorzugt für H, stehen; R⁴ und R⁷, unabhängig voneinander, für H oder -COOM, bevorzugt für H, stehen; und wobei X bei wenigstens 75 Mol-%, insbesondere bei wenigstens 90 Mol-%, speziell bei wenigstens 99 Mol-% aller Monomereinheiten **M2** für -O- steht.

7. Verfahren zur Herstellung eines Copolymers nach wenigstens einem der Ansprüche 1 - 6, wobei ionisierbare Monomere **m1** und Seitenketten-tragende Monomere **m2** unter Ausbildung eines Konzentrationsgradienten und/oder einer Gradientenstruktur zusammen polymerisiert werden, wobei die ionisierbaren Monomere **m1** eine Struktur gemäss der Formel IV aufweisen: 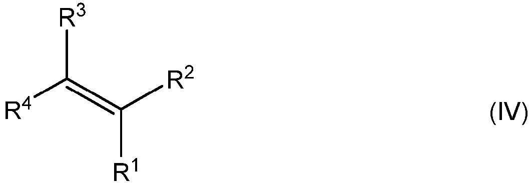
und die Seitenketten-tragenden Monomere **m2** über eine Struktur gemäss der Formel V verfügen: 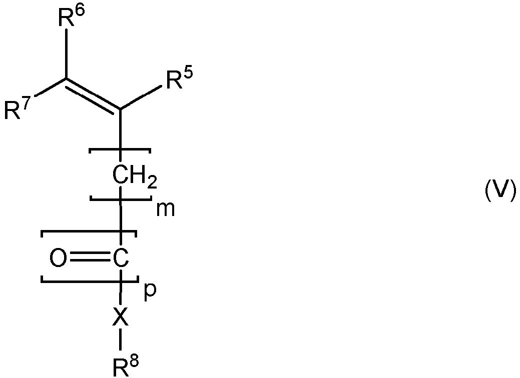
wobei R¹, R², R³, R⁴, R⁵, R⁶, R⁷, R⁸, m, p und X wie in Anspruch 1 definiert sind.

8. Verfahren nach Anspruch 7, **dadurch gekennzeichnet, dass** die Polymerisation durch eine kontrollierte freie radikalische Polymerisation und/oder eine lebende freie radikalische Polymerisation, insbesondere durch Reversible Additions-Fragmentierungs Kettenübertragungs-Polymerisation (RAFT) erfolgt.

9. Verfahren nach wenigstens einem der Ansprüche 7 - 8, wobei in einem ersten Schritt a) ein Teil der Seitenketten-tragenden Monomere **m2** im Wesentlichen in Abwesenheit von ionisierbaren Monomeren **m1** umgesetzt oder polymerisiert werden und nach Erreichen eines vorbestimmten Umsatzes in einem zweiten Schritt b) die noch nicht umgesetzten Seitenketten-tragenden Monomere **m2** zusammen mit den ionisierbaren Monomeren **m1** polymerisiert werden, wobei die Polymerisation in Schritt a) so lange durchgeführt wird, bis 1 - 74 Mol-%, bevorzugt 10 - 70 Mol-%, im Besonderen 25 - 70 Mol %, speziell 28 - 50 Mol-% oder 30 - 45 Mol-% der Seitenkettentragenden Monomere **m2** umgesetzt oder polymerisiert sind.

10. Verwendung eines Copolymers nach wenigstens einem der Ansprüche 1 - 6 als Dispergiermittel für Feststoffpartikel, insbesondere als Dispergiermittel für eine mineralische Bindemittelzusammensetzung, insbesondere zur Verflüssigung, zur Wasserreduktion und/oder zur Verlängerung der Verarbeitbarkeit einer mineralischen Bindemittelzusammensetzung, bevorzugt einer Mörtel- oder Betonzusammensetzung.

11. Mineralische Bindemittelzusammensetzung, insbesondere einer Mörtel- oder Betonzusammensetzung, enthaltend mindestens ein wie in einem der vorstehenden Ansprüche beschriebenes Copolymer.

12. Formkörper, insbesondere ein Bestandteil eines Bauwerks, erhältlich durch Aushärten einer mineralischen Bindemittelzusammensetzung gemäss Anspruch 11 nach Zugabe von Wasser.

## Claims

1. Copolymer, especially for use as a dispersant for solid-state particles, in particular for use as a dispersant for mineral binder compositions, having a polymer backbone and side chains bonded thereto, comprising at least one ionizable monomer unit M1 and at least one side chain-bearing monomer unit M2, **characterized in that** the copolymer has a gradient structure in at least one section A in a direction along the polymer backbone with regard to the ionizable monomer unit M1 and/or with regard to the side chain-bearing monomer unit M2, where the ionizable monomer unit M1 has a structure of the formula I 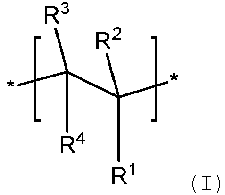
and the side chain-bearing monomer unit M2 includes a structure of the formula II 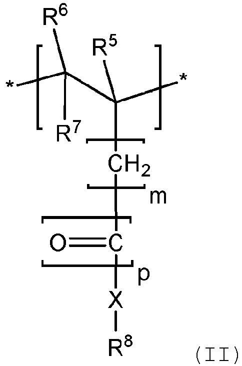
where
R¹, in each case independently, is -COOM, -SO₂-OM, -O-PO(OM)₂ and/or -PO(OM)₂,
R², R³, R⁵ and R⁶, in each case independently, are H or an alkyl group having 1 to 5 carbon atoms,
R⁴ and R⁷, in each case independently, are H, -COOM or an alkyl group having 1 to 5 carbon atoms,
or where R¹ forms a ring together with R⁴ to give -CO-O-CO-,
M, independently of any other, is H⁺, an alkali metal ion, an alkaline earth metal ion, a di- or trivalent metal ion, an ammonium ion or an organic ammonium group; m is 0, 1 or 2,
p is 0 or 1,
X, in each case independently, is -O- or -NH-,
R⁸ is a group of the formula -[AO]ₙ-R^{a}
where A is C₂- to C₄-alkylene, R^{a} is H, a C₁- to C₂₀-alkyl group, -cycloalkyl group or -alkylaryl group,
and n is 2-250, especially 10-200;
where the at least one section A having the gradient structure has a proportion of at least 30% of monomer units, based on a total number of monomer units in the polymer backbone.

2. Copolymer according to Claim 1, wherein the polydispersity of the copolymer is < 1.5 and is particularly in the range of 1.0-1.4, especially 1.1-1.3.

3. Copolymer according to at least one of Claims 1-2, **characterized in that** the at least one section A having the gradient structure has a proportion of at least 50%, preferably at least 75% or 90%, of monomer units, based on a total number of monomer units in the polymer backbone.

4. Copolymer according to at least one of Claims 1-3, **characterized in that** the copolymer, in addition to the at least one section A, has a further section B having an essentially constant local concentration of monomers and/or a random distribution of monomers, where the further section B comprises ionizable monomer units M1 and/or side chain-bearing monomer units M2.

5. Copolymer according to Claim 4, **characterized in that** the further section B having the essentially constant local concentration, based on all the monomer units present therein, comprises at least 30 mol%, especially at least 50 mol%, preferably at least 75 mol%, in particular at least 90 mol% or at least 95 mol%, of side chain-bearing monomer units M2, and wherein any proportion of ionizable monomer units M1 present in the further section is less than 25 mol%, especially not more than 10 mol% or less than 5 mol%, based on all the monomer units M2 in the further section.

6. Copolymer according to at least one of Claims 1-5, **characterized in that** R¹ = COOM; R² and R⁵, independently of one another, are H, -CH₃ or mixtures thereof; R³ and R⁶, independently of one another, are H or -CH₃, preferably H; R⁴ and R⁷, independently of one another, are H or -COOM, preferably H; and where X in at least 75 mol%, particularly in at least 90 mol%, especially in at least 99 mol%, of all monomer units M2 is -O-.

7. Process for preparing a copolymer according to at least one of Claims 1-6, wherein ionizable monomers m1 and side chain-bearing monomers m2 are polymerized together to form a concentration gradient and/or a gradient structure, wherein the ionizable monomers m1 have a structure of the formula IV: 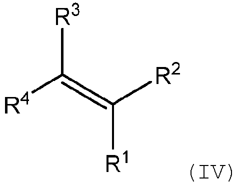
and the side chain-bearing monomers m2 have a structure of the formula V: 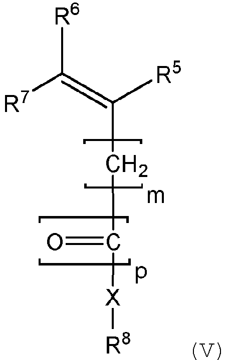
where R¹, R², R³, R⁴, R⁵, R⁶, R⁷, R⁸, m, p and X are as defined in Claim 1.

8. Process according to Claim 7, **characterized in that** the polymerization is effected by a controlled free-radical polymerization and/or a living free-radical polymerization, especially by reversible addition-fragmentation chain transfer polymerization (RAFT).

9. Process according to at least one of Claims 7-8, wherein, in a first step a), a portion of the side chain-bearing monomers m2 is converted or polymerized essentially in the absence of ionizable monomers m1 and, on attainment of a predetermined conversion, in a second step b), the as yet unconverted side chain-bearing monomers m2 are polymerized together with the ionizable monomers m1, the polymerization in step a) being conducted until 1-74 mol%, preferably 10-70 mol%, in particular 25-70 mol%, especially 28-50 mol% or 30-45 mol%, of the side chain-bearing monomers m2 have been converted or polymerized.

10. Use of a copolymer according to at least one of Claims 1-6 as a dispersant for solid-state particles, especially as a dispersant for a mineral binder composition, especially for plasticization, for water reduction and/or for extending the workability of a mineral binder composition, preferably a mortar or concrete composition.

11. Mineral binder composition, especially a mortar or concrete composition, comprising at least one copolymer as described in any of the preceding claims.

12. Shaped body, especially a constituent of a built structure, obtainable by curing a mineral binder composition according to Claim 11 after addition of water.

## Revendications

1. Copolymère, en particulier destiné à être utilisé en tant que dispersant pour des particules solides, en particulier destiné à être utilisé en tant que dispersant pour des compositions de liants minéraux, présentant un squelette polymère et des chaînes latérales qui y sont attachées, comprenant au moins une unité monomère ionisable M1 ainsi qu'au moins une unité monomère M2 portant des chaînes latérales, **caractérisé en ce que** le copolymère présente dans au moins un segment A, dans une direction le long du squelette du polymère, une structure à gradient en ce qui concerne l'unité monomère ionisable M1 et/ou en ce qui concerne l'unité monomère M2 portant des chaînes latérales, l'unité monomère ionisable M1 présentant une structure de formule I, 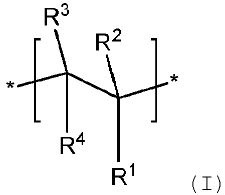
et l'unité monomère M2 portant des chaînes latérales comprend une structure de formule II 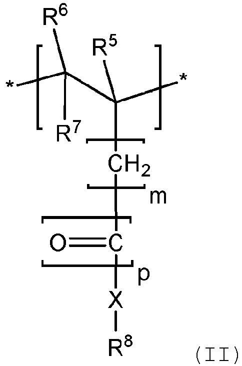
formules dans lesquelles
R¹, chaque fois indépendamment, représente -COOM, -SO₂-OM, -O-PO(OM)₂ et/ou -PO(OM)₂,
R², R³, R⁵ et R⁶, dans chaque cas indépendamment les uns des autres, représentent H ou un groupe alkyle ayant de 1 à 5 atomes de carbone,
R⁴ et R⁷, dans chaque cas indépendamment l'un de l'autre, représentent H, -COOM ou un groupe alkyle ayant de 1 à 5 atome de carbone,
ou R¹ formant avec R⁴ un cycle attaché à CO-O-CO-,
M représente, chaque fois indépendamment, H⁺, un ion de métal alcalin, un ion de métal alcalino-terreux, un ion de métal divalent ou trivalent, un ion ammonium ou un groupe ammonium organique ;
m = 0, 1 ou 2,
p = 0 ou 1,
X, chaque fois indépendamment, représente -O- ou -NH-, R⁸ représente un groupe de formule -[AO]ₙ-R^{a},
dans laquelle A = alkylène en C₂ à C₄, R^{a} représente H, un groupe alkyle en C₁ à C₂₀, un groupe -cycloalkyle ou un groupe -alkylaryle,
et n = 2 - 250, en particulier 10 - 200 ;
dans lequel ledit au moins un segment A ayant la structure à gradient présente une proportion d'au moins 30 % d'unités monomères, par rapport à un nombre total d'unités monomères dans le squelette du polymère.

2. Copolymère selon la revendication 1, dans lequel la polydispersité du copolymère est < 1,5 et se situe en particulier dans la plage de 1,0 - 1,4, spécialement 1,1 - 1,3.

3. Copolymère selon au moins l'une quelconque des revendications 1 - 2, **caractérisé en ce que** ledit au moins un segment A ayant la structure à gradient présente une proportion d'au moins 50 %, de préférence d'au moins 75 % ou 90 %, d'unités monomères, par rapport à un nombre total d'unités monomères dans le squelette du polymère.

4. Copolymère selon au moins l'une quelconque des revendications 1 - 3, **caractérisé en ce que** le copolymère présente, en plus dudit au moins un segment A, un segment B supplémentaire ayant une concentration locale essentiellement constante de monomères et/ou une répartition aléatoire de monomères, le segment B supplémentaire comprenant des unités monomères ionisables M1 et/ou des unités monomères M2 portant des chaînes latérales.

5. Copolymère selon la revendication 4, **caractérisé en ce que** le segment B supplémentaire ayant la concentration locale essentiellement constante comprend, par rapport à la totalité des unités monomères qui y sont contenues, au moins 30 % en moles, en particulier au moins 50 % en moles, de préférence au moins 75 % en moles, en particulier au moins 90 % en moles ou au moins 95 % en moles d'unités monomères M2 portant des chaînes latérales et une proportion éventuellement présente d'unités monomères M1 ionisables dans le segment supplémentaire étant inférieure à 25 % en moles, en particulier inférieure ou égale à 10 % en moles ou inférieure à 5 % en moles, par rapport à la totalité des unités monomères M2 dans le segment supplémentaire.

6. Copolymère selon au moins l'une quelconque des revendications 1 à 5, **caractérisé en ce que** R¹ = COOM ; R² et R⁵, indépendamment l'un de l'autre, représentent H, -CH₃ ou des mélanges de ceux-ci ; R³ et R⁶, indépendamment l'un de l'autre, représentent H ou -CH₃, de préférence H ; R⁴ et R⁷, indépendamment l'un de l'autre, représentent H ou -COOM, de préférence H ; et dans lequel X représente -O- pour au moins 75 % en moles, en particulier pour au moins 90 % en moles, spécialement pour au moins 99 % en moles de toutes les unités monomères M2.

7. Procédé pour la préparation d'un copolymère selon au moins l'une quelconque des revendications 1 - 6, dans lequel des monomères ionisables m1 et des monomères m2 portant des chaînes latérales sont polymérisés ensemble avec formation d'un gradient de concentration et/ou d'une structure à gradient, les monomères ionisables m1 présentant une structure selon la formule IV : 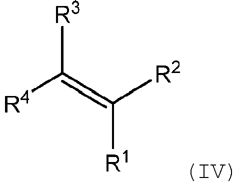
et les monomères m2 qui portent des chaînes latérales étant dotés d'une structure selon la formule V : 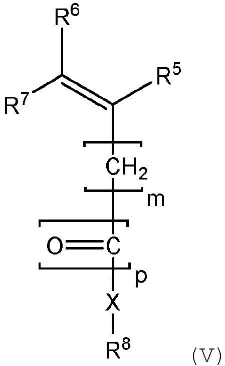
dans laquelle R¹, R², R³, R⁴, R⁵, R⁶, R⁷, R⁸, m, p et X sont tels que définis dans la revendication 1.

8. Procédé selon la revendication 7, **caractérisé en ce que** la polymérisation est effectuée par une polymérisation radicalaire libre contrôlée et/ou une polymérisation radicalaire libre vivante, en particulier par polymérisation par transfert de chaîne réversible par addition-fragmentation (RAFT).

9. Procédé selon au moins l'une quelconque des revendications 7 - 8, dans lequel, dans une première étape a), une partie des monomères m2 portant des chaînes latérales sont mis à réagir ou polymérisés essentiellement en absence de monomères m1 ionisables et, après obtention d'un taux de conversion préétabli, dans une deuxième étape b) les monomères m2 portant des chaînes latérales qui n'ont pas encore réagi sont polymérisés conjointement avec les monomères ionisables m1, la polymérisation dans l'étape a) étant effectuée jusqu'à ce que 1 - 74 % en moles, de préférence 10 - 70 % en moles, en particulier 25 - 70 % en moles, spécialement 28 - 50 % en moles ou 30 - 45 % en moles des monomères m2 portant des chaînes latérales aient réagi ou soient polymérisés.

10. Utilisation d'un copolymère selon au moins l'une quelconque des revendications 1 - 6 en tant que dispersant de particules solides, en particulier en tant que dispersant pour une composition de liant minéral, en particulier pour la fluidification, pour la réduction d'eau et/ou pour la prolongation de l'aptitude à la mise en œuvre d'une composition de liant minéral, de préférence d'une composition de mortier ou de béton.

11. Composition de liant minéral, en particulier d'une composition de mortier ou de béton, contenant au moins un copolymère tel que décrit dans l'une quelconque des revendications précédentes.

12. Corps moulé, en particulier un constituant d'un ouvrage de construction, pouvant être obtenu par durcissement d'une composition de liant minéral selon la revendication 11 après addition d'eau.
